# EUROPEAN PATENT APPLICATION

(11) **EP 3 385 118 A1**
(43) Date of publication of application: **10.10.2018**
(21) Application number: 18000317.0
(22) Date of filing: 03.04.2018
(51) Int. Cl.: B60P 1/64, B60P 3/025, B65D 90/14

(54) **COMMERCIAL ROLL-OFF MODULE FOR FOOD TRUCK AND FOOD TRUCK COMPRISING SUCH MODULE**

(30) Priority: 03.04.2017 IT 201700036091
(71) Applicant: Alcarel S.R.L., 25125 Brescia (IT)
(72) Inventor: Bolpagni, Gianpietro, I-25125 Brescia (IT)
(74) Representative: Garavelli, Paolo

(57) **Abstract**

A commercial roll-off module (1) for food truck (100) is described, comprising at least one supporting structure, and at least four stabilizers (11) extendible in length through only a linear vertical movement and having mutually fixed distances, such stabilizers being adapted to allow their lifting and lowering with respect to a laying surface (7), and their loading on and unloading from such commercial module (1) on a platform or chassis or false loading platform (9) of a transporting vehicle (3). A food truck (100) comprising such commercial module (1) is further described.

## Description

The present invention refers to a commercial roll-off module for food truck and to a food truck comprising such module.

The existence of mobile shops transported on a transporting vehicle is known, in particular on chassis with cabins or with an integrated motor vehicle cabin, appendix trucks, trailers or semitrailers aimed to store, expose and sale products on the go.

In particular, the art proposes food trucks comprising a roll-off module refurbished as shop, which can be transported above the chassis of a truck to be then unloaded in the sales area and then re-loaded again.

Currently, such shop modules are however particularly heavy and cumbersome, and in order to transport them, it is necessary to use suitable trucks, whose sizes and weights require, at least in Italy, their driving by drivers equipped with driving license of category C or greater.

Moreover, to guarantee their roll-off, and also depending on sizes of the loading chassis of the vehicles on which and from which they must be loaded and unloaded, such modules must be equipped with stabilizing devices, which not only take care of their suitable lifting to allow the vehicle chassis to be placed below it to allow its loading, or to be withdrawn, but whose width is also variable to adapt it to the width of the chassis itself: in this case, therefore the vertical stabilizers hinged to the van need to be enlarged (at least the front ones) to suit their width to the width of the vehicle chassis which passes below during the loading/unloading steps.

Roll-off modules are also known, in which, to allow their loading and unloading from the transporting vehicle, the stabilizers must be taken from a horizontal rest position to a vertical elongation/shortening position, implying relatively high complexity and operating times: this type of moduli further requires their transport on vehicles suitably equipped with transport caissons.

Moreover, currently known shop modules have fastening systems to the chassis of the transporting vehicle which very often can be actuated in a complex and difficult way.

Therefore, object of the present invention is solving the above prior art problems, by providing a commercial roll-off module for food truck which allows the transport with and the roll-off from a vehicle having reduced sizes and weight, for driving which it is enough to have a driving license of category B.

Moreover, an object of the present invention is providing a commercial roll-off module for food truck which allows loading and unloading operations from its related transporting vehicle which are quicker and easier with respect to what is proposed by the prior art.

Another object of the present invention is providing a commercial roll-off module for food truck equipped with fastening means to the chassis of the transporting vehicle whose actuation is easier and quicker than what is proposed by the prior art.

Moreover, an object of the present invention is providing a food truck equipped with commercial roll-off module which can be driven also only with a driving license of category B.

The above and other objects and advantages of the invention, as will appear from the following description, are obtained with a commercial roll-off module for food truck as claimed in claim 1.

Moreover, the above and other objects and advantages of the invention are obtained with a food truck as claimed in claim 9.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the present invention as appears from the enclosed claims.

The present invention will be better described by some preferred embodiments thereof, provided as a non-limiting example, with reference to the enclosed drawings, in which:
- Figures 1a, 1b and 1c show external side views of a preferred embodiment of the commercial roll-off module for food truck according to the present invention;
- Figures 2a, 2b and 2c show side sectional views of a preferred embodiment of the commercial roll-off module for food truck according to the present invention;

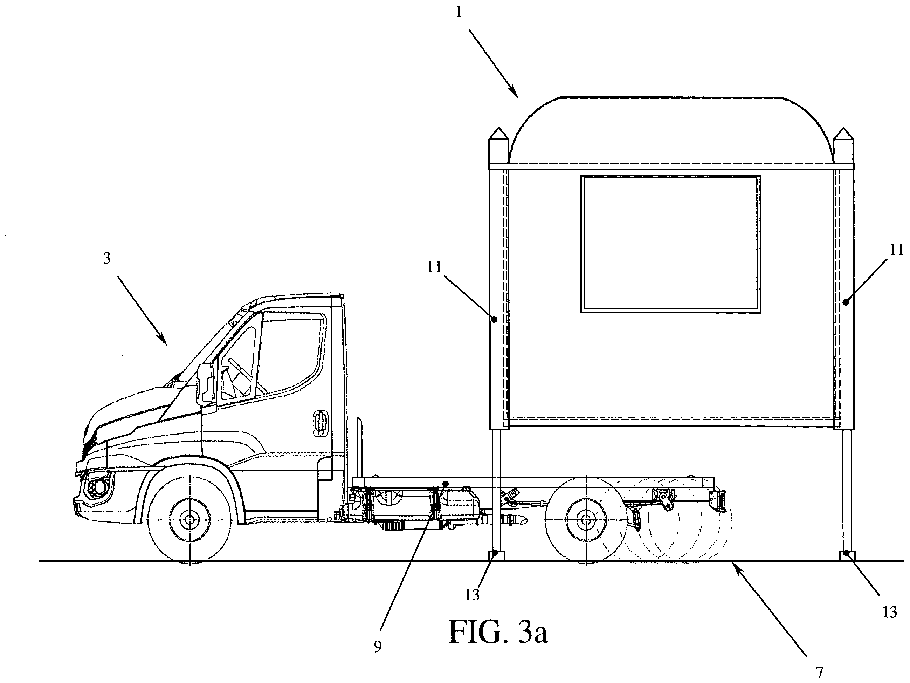

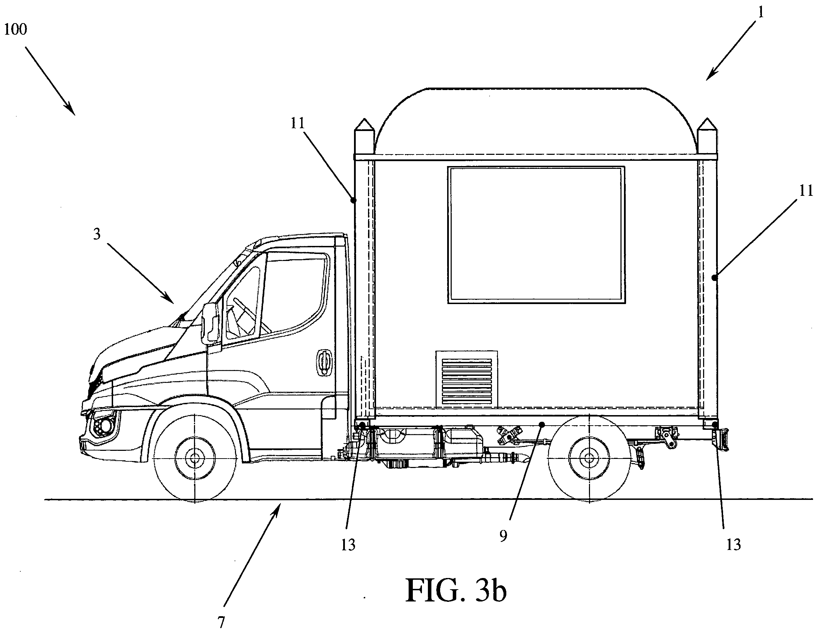

- Figures 3a and 3b show side views of a preferred embodiment of the food truck according to the present invention in two respective operating positions;
- Figure 4a shows a rear view of the food truck of Figure 3a; and
- Figure 4b shows an enlarged view of the detail enclosed in circle A of Figure 4a.

With reference then to the Figures, it is possible to note that the commercial roll-off module 1 for food truck 100 according to the present invention comprises at least one supporting structure, for example of the type composed of side walls 2, floor 4, upper cover or roof 5, one or more windows or openings 6 or doors or sales counters; in the specific case in which the commercial module 1 according to the present invention is used as shop, it is possible to provide that it can obviously be refurbished internally and externally with the most suitable devices and means (for, example, refrigerators, cooking planes, wash-basins, cupboards, etc.) for the type of sales to which the module 1 itself is aimed. Instead, if the commercial module 1 according to the present invention is used as exhibition, it is possible to provide that it can be refurbished with different numbers and arrangements of exhibiting windows.

Advantageously, in order to allow its lifting and lowering with respect to a laying surface 7, such as for example the ground, and its loading on and unloading from the platform or chassis or false loading platform 9 of a transporting vehicle 3, such vehicle 3 preferably having such weights, features and sizes that, for driving it on a road, it is enough, at least in Italy, to have a driving license of category B, the module 1 according to the present invention comprises at least four stabilizers 11, and, contrary to what is instead proposed by the prior art, such stabilizers 11 are extendible in length through only a linear vertical movement and mutually having fixed distances. Preferably, each one of such stabilizers 11 is equipped with a respective bearing foot 13 onto the laying surface 7, such bearing feet 13 mutually having fixed distances.

Preferably, the stabilizers 11 are arranged at the vertexes of a virtual polygon or along a suitable curved or broken virtual line and, still more preferably, in the angular positions of the supporting structure of the module 1 defined by the joining angles between the walls 3. It is wholly clear that the operating principle which determines the extension of each stabilizer 11 can be various and, for example, of the oil-dynamic, mechanical or pneumatic type, without thereby departing from the scope of the present invention.

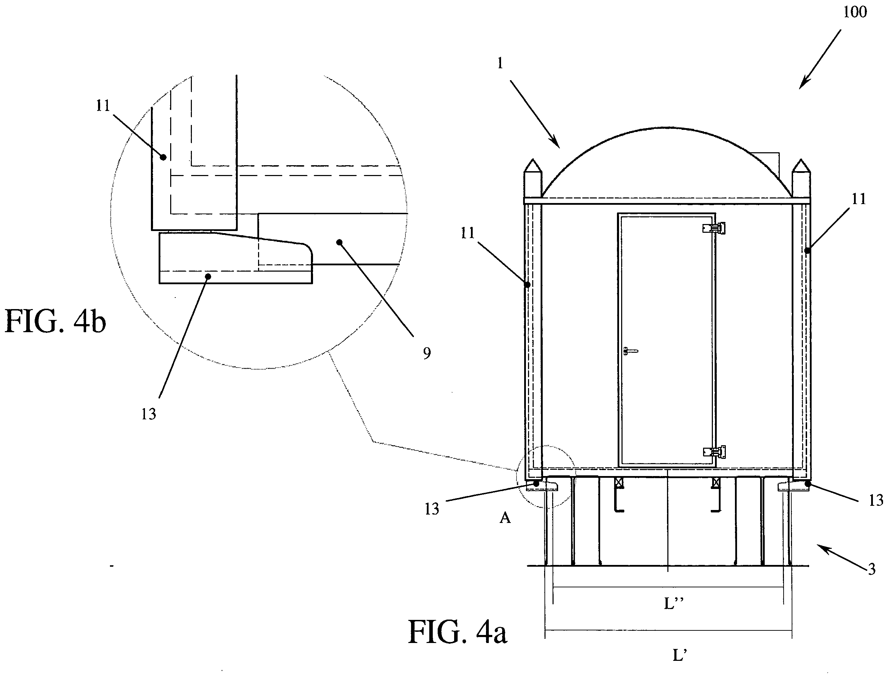

Obviously, as it is possible to note from Figure 4a, to allow loading the module 1 according to the present invention on the transporting vehicle 3 keeping unchanged the distance between the stabilizers 11, the width L' between each rear and lower pair of side stabilizers 11 will have to be greater than the width L" of the platform or chassis or false loading platform 9 of the transporting vehicle 3 itself.

Advantageously, at least one bearing foot 13 is shaped as a "L" and can rotate around a longitudinal vertical rotation axis of at least one respective stabilizer 11 to assume at least one first operating position (like the one, for example, shown in Figures 4a and 4b) in which it engages, for example on the lower side, a respective portion of the platform or chassis or false loading platform 9 to be able to constrain the module 1 to the transporting vehicle 3, and at least one second operating position in which such bearing foot 13 disengages such portion of the platform or chassis or false loading platform 9 to allow the module 1 to be able to be unconstrained from the transporting vehicle 3.

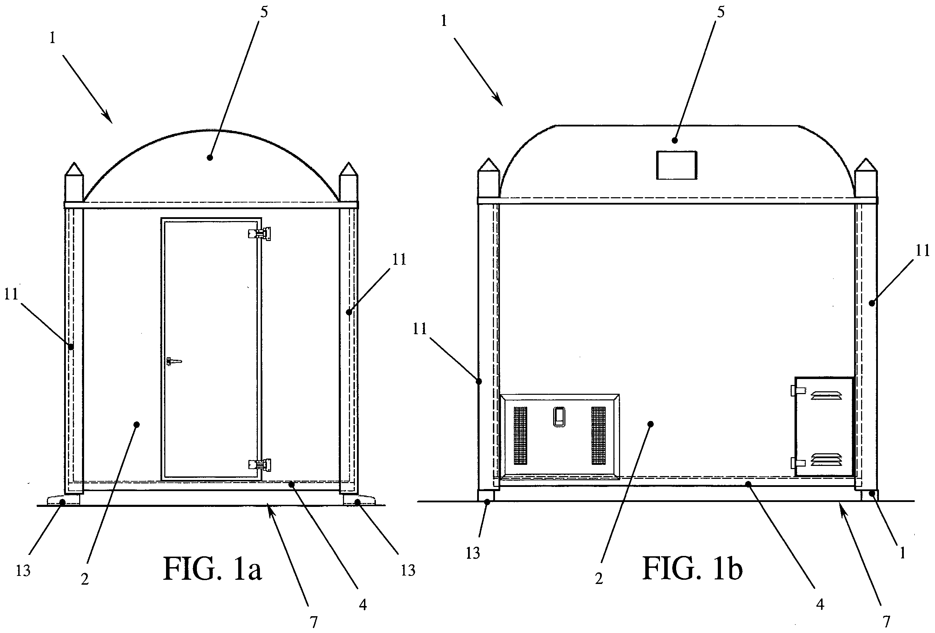

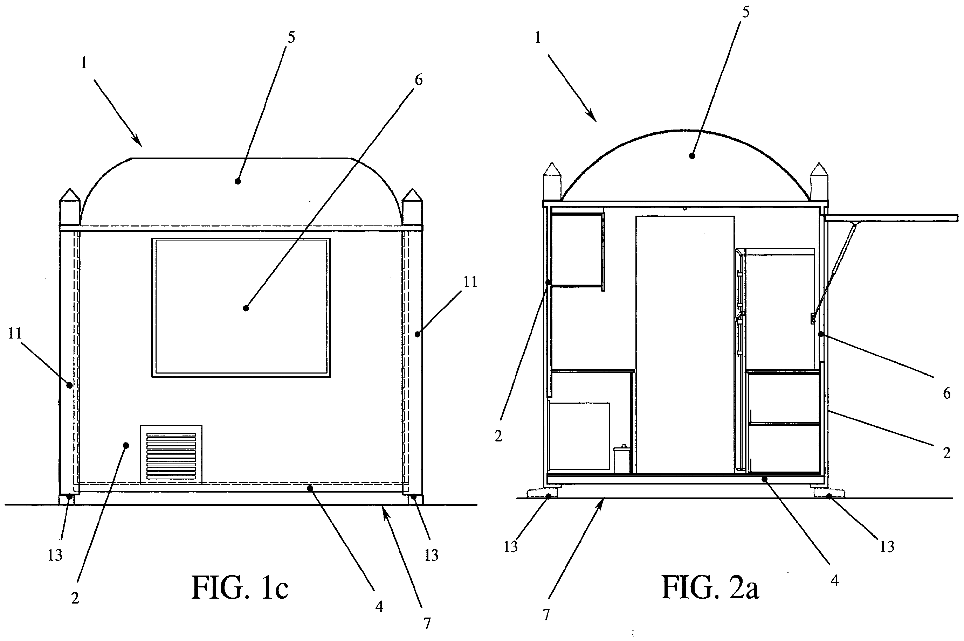

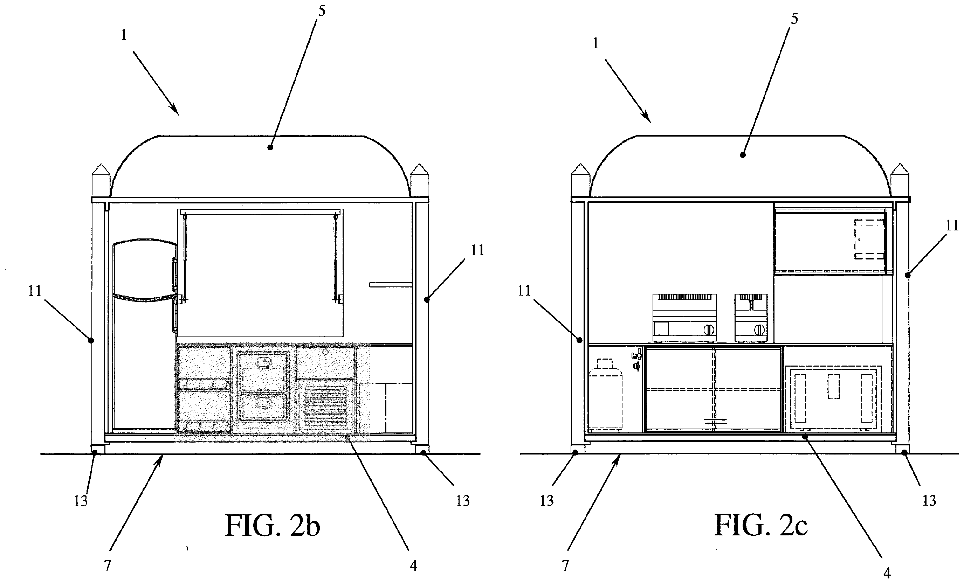

The bearing foot 13 could also assume a further operating position, possibly coinciding with the second operating position, corresponding to an enlarged and more stable bearing position on the laying surface 7 (like the one, for example, shown in Figures 1a and 2a).

Therefore, in order to constrain the commercial module 1 to the transporting vehicle 3 once loaded on the platform or chassis or false loading platform 9, it is enough to take one or more bearing feet 13 (preferably all four of them) by rotating them around the longitudinal vertical rotation axis of the respective stabilizer 11, from the second operating position to the first operating position, in which at least one part of the "L" shape engages the respective portion of the platform or chassis or false loading platform 9, consequently holding the commercial module 1 onto the transporting vehicle 3.

On the contrary, to un-constrain the commercial module 1 from the transporting vehicle 3 (for example in order to allow its roll-off), it is enough to take one or more bearing feet 13 (preferably all four of them), previously taken to the first operating position by rotating around the longitudinal vertical rotation axis of the respective stabilizer 11, from such first operating position to the second operating position in which the part of the "L" shape disengages the respective portion of the platform or chassis or false loading platform 9 and consequently frees the commercial module 1 from the transporting vehicle 3.

The present invention further deals with a food truck 100 comprising at least one transporting vehicle 3 and at least one commercial module 1 as previously described, adapted to be transported on at least one platform or chassis or false loading platform 9 of such vehicle 3: advantageously, the transporting vehicle 3 has such weights, features and sizes as to allow its driving on a road, at least in Italy, with a driving license of category B. The commercial module 1 and its related food truck 100 according to the present invention therefore allow obtaining several advantages, the first of which being offering a sales structure having smaller weights and sizes with respect to what is proposed by the prior art, consequently allowing a parallel saving of purchasing and managing costs, as well as a reduced use complexity, requiring for the driver of the transporting vehicle, the possession even only of a driving license of category B. Moreover, the commercial module 1 and its related food truck 100 according to the present invention, differently from all other prior art roll-off vehicles, can be used also for sales, without necessarily providing a roll-off module, because the heights of the related transporting vehicle allow it: advantageously, therefore, a customer, also in this case, can easily access the sales window (with optimum product visibility) or the sales counter, which was instead impossible in traditional roll-off vehicles.

## Claims

1. Commercial roll-off module (1) for food truck (100) comprising at least one supporting structure, **characterized in that** it comprises at least four stabilizers (11) extendible in length through only a linear vertical movement and mutually having fixed distances, said stabilizers being adapted to allow their lifting and lowering with respect to a laying surface (7), and their loading on and unloading from said commercial module (1) on a platform or chassis or false loading platform (9) of a transporting vehicle (3).

2. Commercial roll-off module (1) according to the previous claim, **characterized in that** said stabilizers (11) are arranged at vertexes of a virtual polygon or along a suitable curved or broken virtual line.

3. Commercial roll-off module (1) according to the previous claim, **characterized in that** said stabilizers (11) are arranged in angular positions of said supporting structure.

4. Commercial roll-off module (1) according to any one of the previous claims, **characterized in that** the width (L') between each rear and lower pair of said side stabilizers (11) is greater than the width (L") of said platform or chassis or false loading platform (9) of said transporting vehicle (3).

5. Commercial roll-off module (1) according to any one of the previous claims, **characterized in that** each one of said stabilizers (11) is equipped with at least one bearing foot (13) onto said laying surface (7), said bearing feet (13) mutually having fixed distances.

6. Commercial roll-off module (1) according to the previous claim, **characterized in that** said bearing foot (13) is shaped as a "L" and can rotate around a longitudinal vertical rotation axis of at least one of said stabilizers (11) to assume at least one first operating position in which it engages a respective portion of said platform or chassis or false loading platform (9) and at least one second operating position in which it disengages said portion of said platform or chassis or false loading platform (9).

7. Commercial roll-off module (1) according to the previous claim, **characterized in that** said bearing foot (13) assumes a further operating position, possibly coinciding with said second operating position, corresponding to an enlarged and more stable bearing position on said laying surface (7).

8. Commercial roll-off module (1) according to any one of the previous claims, **characterized in that** said vehicle (3) has such weights, features and sizes that, for driving it on a road, a driving license of category B is enough.

9. Food truck (100) comprising at least one transporting vehicle (3) and at least one commercial module (1) according to any one of the previous claims, said commercial module (1) being adapted to be transported on at least one platform or chassis or false loading platform (9) of said vehicle (3), **characterized in that** said transporting vehicle (3) has such weights, features and sizes as to allow its driving on a road with a driving license of category B.
